# EUROPEAN PATENT SPECIFICATION

(11) **EP 3 404 978 B1**
(45) Date of publication and mention of the grant of the patent: **25.03.2020**
(21) Application number: 17746698.4
(22) Date of filing: 06.01.2017
(51) Int. Cl.: H04W 72/04, H04W 88/08

(54) **DATA TRANSMISSION METHODS AND RELATED WIRELESS NETWORK DEVICES**
DATENÜBERTRAGUNGSVERFAHREN UND ZUGEHÖRIGE VORRICHTUNGEN FÜR EIN DRAHTLOSES NETZ
PROCÉDÉS DE TRANSMISSION DE DONNÉES ET DISPOSITIFS DE RÉSEAU SANS FIL ASSOCIÉS

(30) Priority: 06.02.2016 CN 201610084146
(43) Date of publication of application: 21.11.2018
(73) Proprietor: Huawei Technologies Co., Ltd., Longgang District Shenzhen, Guangdong 518129 (CN)
(72) Inventor: ZHANG, Yi, Shenzhen Guangdong 518129 (CN); TANG, Zhenfei, Shenzhen Guangdong 518129 (CN)
(74) Representative: Epping - Hermann - Fischer
(86) International application number: PCT/CN2017/070514
(87) International publication number: WO 2017/133378

(56) References cited:
- EP-A1- 2 635 082
- WO-A1-2015/179135
- WO-A2-2008/115134
- CN-A- 101 523 795
- CN-A- 101 924 721
- CN-A- 105 025 574
- US-B2- 8 204 098
- "Sharp's 5G Views and Technologies", 3GPP DRAFT; RWS-150049_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. Phoenix, USA; 20150917 - 20150918 3 September 2015 (2015-09-03), XP051043767, Retrieved from the Internet: URL:http://www.3gpp.org/ftp/workshop/2015- 09-17_18_RAN_5G/Docs/ [retrieved on 2015-09-03]

## Description

### TECHNICAL FIELD

The present invention relates to the field of communications technologies, and in particular, to a data transmission method, a related device, and a system.

### BACKGROUND

Transmission of a low-latency service, for example, an ultra-reliable machine type communication (Ultra-reliable Machine Type Communication, uMTC) service defined by the International Telecommunication Union (International Telecommunication Union, ITU) in a 5G communications standard, is an application scenario in Internet of Things with massive connections in the future. For the low-latency service, a small amount of data needs to be fast transmitted each time. A short transmission latency is an important feature of the low-latency service.

The Internet of Things features high reliability and a low latency. When connection reliability reaches carrier-class reliability of 99.999%, an end-to-end latency is shortened to 1 millisecond in a 5G technology, so as to implement application scenarios such as real-time remote mechanical control, automated driving, a smart grid, and a telemedicine operation. It can be understood that the low-latency service may be a service whose round trip time (Round Trip Time, RTT) does not exceed a specific threshold. The round trip time represents a total latency from sending data by a transmit end to receiving an acknowledgment by the transmit end from a receive end (the receive end immediately sends the acknowledgment after receiving the data). Generally, one transmission time interval (Transmission Time Interval, TTI) is a length of one time of independent decoding transmission in a radio link. Duration of one TTI is related to a size of a data block from a higher network layer to a radio link layer. For example, in 3GPP LTE and LTE-A standards, one TTI is equal to 1 ms, namely, one subframe (subframe) (equivalent to two timeslots). A transmission time interval is a basic time unit for radio resource management (scheduling and the like).

To transmit the low-latency service in time, a transmission time interval of the low-latency service usually needs to be not greater than one transmission time interval. In actual application, a specific value of a latency threshold of the low-latency service may be set according to an actual criterion or based on an application scenario requirement. For example, in consideration of an application requirement of the 5^{th} generation mobile communications system and a future mobile communications system, a service whose round trip time does not exceed 1 millisecond may be specifically defined as the low-latency service.

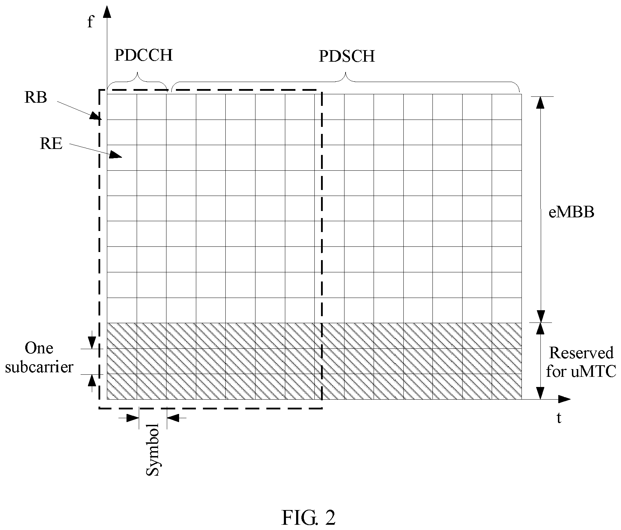

In the prior art, as shown in FIG. 2, a base station reserves a fixed time-frequency resource, namely, a resource indicated by slashes in the figure, for a low-latency service such as a uMTC service, so that when the low-latency service arrives, the base station can fast and directly transmit the low-latency service on the reserved resource. However, the low-latency service is usually a burst service of a relatively small data amount. Therefore, resource waste is caused in the prior-art method in which a resource is reserved for a low-latency service.

EP 2635082 A1 relates to transmitting and receiving data in a multicarrier communication system in which the transmission and reception is performed on a transmission time interval basis. In particular, dynamic bundling of transmission time intervals is dynamically configurable for each scheduling assignment. The dynamic bundling may be applied in uplink and/or in downlink transmission between a terminal and a network node.

WO 2008/115134 A2 relates to a radio communications link, which is established between radio stations, and a semi-persistent radio resource, which is allocated to support data transmission over the communications link. The semi-persistent radio resource is associated with a corresponding automatic repeat request (ARQ) process identifier. Non-limiting examples of a semi-persistent radio resource include a regularly scheduled transmission time interval, frame, subframe, or time slot during which to transmit a data unit over the radio interface. Retransmission is requested of a data unit transmitted using the semi-persistent radio resource. The ARQ process identifier associated with the semi-persistent resource is used to match a retransmission of a data unit dynamically scheduled on the communications link with the requested data unit retransmission. In a preferred example embodiment, the ARQ process identifier is a hybrid ARQ (HARQ) process, where a retransmitted data unit is combined with a previously-received version of the data unit.

The document "RWS-150049" from the 3GPP RAN Workshop on 5G, Phoenix, USA, September 17 - 18, 2015 provides an overview of a schedule for 5G standardization, as it was proposed in September 2015, as well as specific use cases and required technical enhancements regarding a support of future IoT businesses and eMBB enabled by Enhanced LTE and New RAT.

### SUMMARY

Embodiments of the present invention provide data transmission methods and related devices according to the attached claims.

In implementation of the embodiments of the present invention, the base station may select, from the resource that is corresponding to the current transmission time interval and that meets the preset condition, the resource for transmitting the low-latency service, and send the low-latency service to the terminal on the selected resource. The resource that meets the preset condition includes the scheduled resource. In the foregoing solutions, resource utilization can be improved while the low-latency service is transmitted in time. Further, the resource that meets the preset condition does not include the resources reserved to carry the cell downlink control signal, the downlink synchronization signal, and the cell-specific downlink reference signal. In this way, the cell control signal, the synchronization signal, and the reference signal can be normally transmitted without being affected by transmission of the low-latency service.

### BRIEF DESCRIPTION OF DRAWINGS

To describe the technical solutions in the embodiments of the present invention more clearly, the following briefly describes the accompanying drawings required for describing the embodiments.
FIG. 1 is a schematic diagram of a communications system according to an embodiment of the present invention;
FIG. 2 is a schematic diagram of reserving a resource for a low-latency service in the prior art;
FIG. 3 is a schematic flowchart of a data transmission method according to an embodiment of the present invention;
FIG. 4A is a schematic diagram of determining a resource for transmitting a low-latency service according to an embodiment of the present invention;
FIG. 4B is another schematic diagram of determining a resource for transmitting a low-latency service according to an embodiment of the present invention;
FIG. 4C is still another schematic diagram of determining a resource for transmitting a low-latency service according to an embodiment of the present invention;
FIG. 4D is yet another schematic diagram of determining a resource for transmitting a low-latency service according to an embodiment of the present invention;
FIG. 5 is a schematic structural diagram of a wireless network device according to an embodiment of the present invention;
FIG. 6 is a schematic structural diagram of another wireless network device according to an embodiment of the present invention;
FIG. 7 is a schematic structural diagram of a wireless network device according to an embodiment of the present invention; and
FIG. 8 is a schematic structural diagram of another wireless network device according to an embodiment of the present invention.

### DESCRIPTION OF EMBODIMENTS

Terms used in implementation parts of the present invention are merely intended to explain specific embodiments of the present invention, but are not intended to limit the present invention.

Technical solutions in the embodiments of the present invention may be applied to various communications systems such as a Long Term Evolution (Long Term Evolution, LTE) TDD system, a distributed multiple-input multiple-output (Multiple-Input Multiple-Output, MIMO) system based on multi-cell coordination, a massive (Massive) MIMO system based on a large-scale antenna group, the future evolved 5^{th} generation (the 5^{th} Generation, 5G) mobile communications system, a machine to machine (Machine To Machine, M2M) communications system, a device to device (Device to Device, D2D) communications system, and a system in which a plurality of base stations are coordinated.

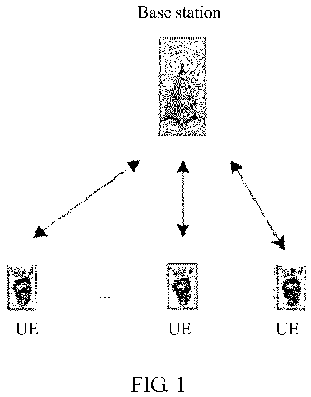

FIG. 1 is a simplified application scenario diagram of various communications systems according to an embodiment of the present invention. As shown in the figure, at least a base station and a plurality of user equipments (User Equipment, UE) located in a same cell are included. In uplink transmission, the user equipment sends a message to the base station. In downlink transmission, the base station sends a message to the user equipment. A transmission channel between the user equipment and the base station is referred to as a channel, and includes an uplink channel and a downlink channel.

In the embodiments of the present invention, all aspects are described by using a wireless network device. The wireless network device may be a base station. The base station may be configured to communicate with one or more user equipments, or may be configured to communicate with one or more base stations that have some functions of user equipment (for example, communication between a macro base station and a micro base station or communication between access points). The base station may be a base transceiver station (Base Transceiver Station, BTS) in Time Division-Synchronous Code Division Multiple Access (Time Division-Synchronous Code Division Multiple Access, TD-SCDMA), an evolved NodeB (evolved Node B, eNB) in LTE, or a base station in a future network. The wireless network device may alternatively be user equipment. The user equipment may be configured to communicate with one or more user equipments (for example, D2D communication), or may be configured to communicate with one or more base stations. The user equipment may be referred to as a user terminal, and may include some or all functions of a system, a subscriber unit, a subscriber station, a mobile station, a mobile wireless terminal, a mobile device, a node, a device, a remote station, a remote terminal, a terminal, a wireless communications device, a wireless communications apparatus, or a user agent. The user equipment may be a cellular phone, a cordless telephone set, a Session Initiation Protocol (Session Initiation Protocol, SIP) phone, a smartphone, a wireless local loop (wireless local loop, WLL) station, a personal digital assistant (Personal Digital Assistant, PDA), a laptop computer, a handheld communications device, a handheld computing device, a satellite wireless device, a wireless modem card, and/or another processing device for communication in a wireless system. In addition, the base station may be referred to as an access point, a node, or another network entity, and may include some or all functions of the foregoing network entities. The base station may communicate with a wireless terminal by using an air interface. The communication may be performed by using one or more sectors. The base station may further coordinate air interface attribute management, and may be used as a gateway between a wired network and a wireless network. In the embodiments of the present invention, description is provided by using an example in which a base station communicates with user equipment. It can be understood that the embodiments of the present invention may be applied to communication between a first wireless network device and a second wireless network device, for example, communication between a base station and user equipment, communication between base stations, or communication between user equipments. Description is provided below by using the example in which a base station communicates with user equipment.

Terms such as "module" used in the embodiments of the present invention are intended to indicate a computer-related entity. The computer-related entity may be hardware, firmware, a combination of hardware and software, software, or running software. For example, a component may include but is not limited to a processor, an object, an executable file, a thread in execution, a program, and/or a computer. For example, both an application that runs on a computing device and the computing device may be components. One or more components may reside within a process and/or a thread in execution, and a component may be located in one computer and/or distributed between two or more computers. In addition, these components can be executed in various computer readable media that have various data structures. These components may perform communication based on, for example, a signal having one or more data packets (for example, data from one component, where the component interacts with another component in a local system or a distributed system, and/or interacts with another system through signal transmission by using a network such as the Internet) in a local process and/or a remote process. In the embodiments of the present invention, all aspects, embodiments, or features are presented by describing a system that may include a plurality of devices, modules, and the like. It should be appreciated and understood that each system may include another device, component, module, and the like, and/or may exclude all devices, components, modules, and the like discussed with reference to the accompanying drawings. In addition, a combination of these solutions may be further used.

In the embodiments of the present invention, information (information), signal (signal), message (message), and channel (channel) may be interchangeably used sometimes. It should be noted that expressed meanings are consistent when differences are not emphasized. "Of (of)", "corresponding or relevant (corresponding or relevant)", and "corresponding (corresponding)" may be interchangeably used sometimes. It should be noted that expressed meanings are consistent when differences are not emphasized.

A network architecture and a service scenario described in the embodiments of the present invention are intended to describe the technical solutions in the embodiments of the present invention more clearly, and do not constitute any limitation on the technical solutions provided in the embodiments of the present invention. A person of ordinary skill in the art may learn that as the network architecture evolves and a new service scenario emerges, the technical solutions provided in the embodiments of the present invention are also applicable to a similar technical problem.

A resource in the embodiments of the present invention is usually represented by a resource element (Resource Element, RE) or a resource block (Resource Block, RB). A resource corresponding to one transmission time interval may be shown in FIG. 2. One grid indicates one RE, and one RE includes one subcarrier in frequency domain and one symbol in time domain. The symbol herein may be an orthogonal frequency division multiplexing (Orthogonal Frequency Division Multiplexing, OFDM) symbol, a single carrier frequency division multiple access (Single Carrier Frequency Division Multiple Access, SC-FDMA) symbol, or another symbol. M (M is a positive integer) consecutive subcarriers in one transmission time interval may form one RB. For example, one RB may include 180 kHz consecutive in terms of frequency and one timeslot in time domain. When a subcarrier spacing is 15 kHz, one RB may be corresponding to 12 subcarriers in frequency domain. One timeslot is 0.5 ms, and usually includes seven OFDM or SC-FDMA symbols. One RB may be corresponding to seven OFDM or SC-FDMA symbols in time domain.

It should be noted that the transmission time interval in the embodiments of the present invention may be a TTI defined in LTE, or a scheduling time interval defined in 5G or future new radio (New Radio, NR).

The scheduling time interval is duration of performing one time of scheduling. Generally, in this interval, only one scheduling operation is performed, for example, resource allocation or data sending. In NR, the scheduling time interval may be one timeslot, one mini-slot (mini-slot), an aggregation of a plurality of timeslots, an aggregation of a plurality of mini-slots, or an aggregation of n mini-slots and m timeslots, where n and m are positive integers greater than or equal to 1.

The following clearly describes the technical solutions in the embodiments of the present invention with reference to the accompanying drawings in the embodiments of the present invention.

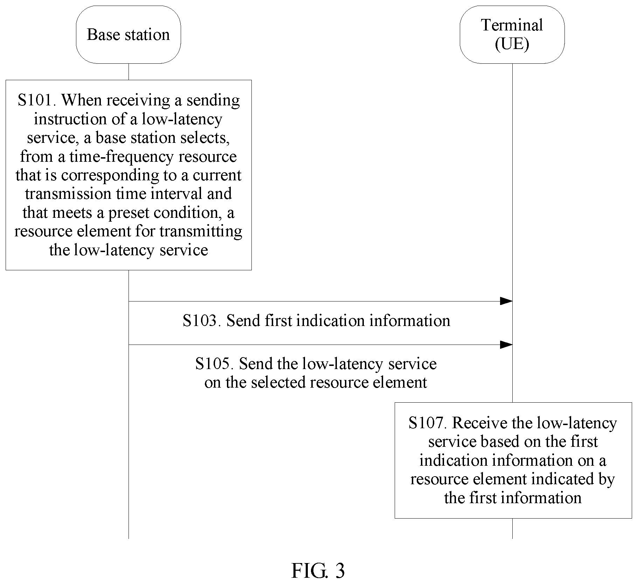

A data transmission method provided in the present invention is first described with reference to FIG. 3. As shown in FIG. 3, the data transmission method includes the following steps.

S101. When receiving a sending instruction of a low-latency service, a base station selects, from a time-frequency resource that is corresponding to a current transmission time interval and that meets a preset condition, a resource element for transmitting the low-latency service.

Herein, the time-frequency resource that meets the preset condition may include a scheduled time-frequency resource. Further, the time-frequency resource that meets the preset condition does not include resource elements reserved to carry a cell downlink control signal, a downlink synchronization signal, and a cell-specific downlink reference signal. In this embodiment of the present invention, the time-frequency resource that meets the preset condition may be referred to as a first resource.

In this embodiment of the present invention, the scheduled time-frequency resource may include a time-frequency resource that is allocated by the base station to each terminal through resource scheduling and that is used to transmit a data service, and a time-frequency resource that is allocated by the base station to each terminal through resource scheduling and that is used to transmit other data (for example, control information). The resource elements reserved to carry the cell downlink control signal, the downlink synchronization signal, and the cell-specific downlink reference signal are resource elements reserved by the base station according to protocol specifications.

In specific implementation, the scheduled time-frequency resource may be in a basic scheduling unit of a symbol (for example, an OFDM or SC-FDMA symbol), the scheduled time-frequency resource may be in a basic scheduling unit of a resource block (RB), or the scheduled time-frequency resource may be in a basic scheduling unit of a timeslot or a mini-slot (mini-slot). In specific implementation, when the low-latency service arrives, the time-frequency resource for transmitting the low-latency service may include a scheduled symbol (symbol) in the current TTE, a scheduled resource block (RB) in the current TTI, or a scheduled timeslot or mini-slot in the current TTI.

To ensure normal communication of a cell, the time-frequency resource that meets the preset condition does not include resources reserved to carry the cell downlink control signal, the downlink synchronization signal, and the cell-specific downlink reference signal. The resources herein reserved to carry the cell downlink control signal, the downlink synchronization signal, and the cell-specific downlink reference signal are resources reserved by the base station according to the protocol specifications.

In actual application, the current transmission time interval may be configured to transmit one, two, or all of the cell downlink control signal, the downlink synchronization signal, and the cell-specific downlink reference signal. In other words, the base station may reserve, in the current transmission time interval based on the configuration, a resource to carry one, two, or all of the cell downlink control signal, the downlink synchronization signal, and the cell-specific downlink reference signal.

In implementation of this solution of the present invention, configuration information of the current transmission time interval may be first obtained. Then, it is learned, through analysis based on the configuration information, that the current transmission time interval is configured to transmit which signal or signals in the cell downlink control signal, the downlink synchronization signal, and the cell-specific downlink reference signal. Finally, a resource that is not included in the time-frequency resource that is corresponding to the current transmission time interval and that meets the preset condition is determined.

Specifically, for the cell downlink control signal, the downlink synchronization signal, and the cell-specific downlink reference signal, if the current transmission time interval is configured to reserve only a time-frequency resource for transmitting the cell downlink control signal, the time-frequency resource that is corresponding to the current transmission time interval and that meets the preset condition may exclude only a resource element reserved to carry the cell downlink control signal. If the current transmission time interval is configured to reserve only a time-frequency resource for transmitting the downlink synchronization signal, the time-frequency resource that is corresponding to the current transmission time interval and that meets the preset condition may exclude only a resource element reserved to carry the downlink synchronization signal. If the current transmission time interval is configured to reserve only a time-frequency resource for transmitting the cell-specific downlink reference signal, the time-frequency resource that is corresponding to the current transmission time interval and that meets the preset condition may exclude only a resource element reserved to carry the cell-specific downlink reference signal.

Similarly, for the cell downlink control signal, the downlink synchronization signal, and the cell-specific downlink reference signal, if the current transmission time interval is configured to reserve only time-frequency resources for transmitting two of the cell downlink control signal, the downlink synchronization signal, and the cell-specific downlink reference signal, the time-frequency resource that is corresponding to the current transmission time interval and that meets the preset condition may exclude only resource elements reserved to carry the two signals. It can be understood that if the current transmission time interval is configured to reserve time-frequency resources for transmitting the cell downlink control signal, the downlink synchronization signal, and the cell-specific downlink reference signal, the time-frequency resource that is corresponding to the current transmission time interval and that meets the preset condition may exclude the resource elements reserved to carry the cell downlink control signal, the downlink synchronization signal, and the cell-specific downlink reference signal.

In other words, that the time-frequency resource that is corresponding to the current transmission time interval and that meets the preset condition does not include the resource elements reserved to carry the cell downlink control signal, the downlink synchronization signal, and the cell-specific downlink reference signal may be based on that the current transmission time interval is corresponding to resource elements reserved to carry corresponding signals. Specifically, S101 may be triggered by the sending instruction of the low-latency service. The sending instruction may be a sending instruction generated through triggering by another network device, an administrator, or the like outside the base station, or may be a sending instruction automatically generated through triggering by a timer or the like inside the base station.

S103. The base station sends first indication information to a terminal, so as to instruct the terminal to receive the low-latency service on a resource element indicated by the first indication information. The first indication information herein may be used to indicate the selected resource element. Correspondingly, the terminal receives the first indication information sent by the base station, and may receive, based on the first indication information on the resource indicated by the first indication information, the low-latency service sent by the base station.

The first indication information herein belongs to control information, and has a relatively small data amount, and the base station may send the first indication information by using a pre-specified resource. For example, the base station may dispersedly send the first indication information on a plurality of fixed REs on a physical downlink control channel (PDCCH), so as to reduce channel interference.

It can be understood that because the base station sends the first indication information to the terminal, the terminal may learn of the resource for transmitting the low-latency service, and may need to monitor only the resource indicated by the first indication information to determine whether there is a low-latency service sent to the terminal, and does not need to search all system resources for a low-latency service sent to the terminal. In this way, the terminal does not need to perform full-frequency search to obtain the low-latency service, thereby reducing design difficulty in receiving the low-latency service by the terminal.

It should be noted that the pre-specified resource for transmitting the first indication information does not conflict with the resources reserved to carry the cell downlink control signal, the downlink synchronization signal, and the cell-specific downlink reference signal.

S105. The base station sends the low-latency service on the selected resource element.

S107. Correspondingly, the terminal may receive, based on the first indication information on the resource element indicated by the first indication information, namely, the selected resource element, the low-latency service sent by the base station.

In this embodiment of the present invention, the low-latency service may be a low-latency service defined in LTE, a uMTC service defined in a 5G communications standard, or any service that has a millisecond-level latency requirement in future new radio (NR), for example, an ultra-reliable and low-latency communication (Ultra Reliable and Low Latency Communication, URLLC) service. This is not limited herein.

In this embodiment of the present invention, the low-latency service may be referred to as a first service. It can be understood that the first service has a relatively high latency requirement, and needs to be immediately sent upon arrival. In specific implementation, a service whose transmission latency is less than a preset latency such as 1 millisecond may be defined as the first service. To send the first service in time, the first service may be configured as being allowed to occupy the scheduled resource. In this embodiment of the present invention, a non-low-latency service may be referred to as a non-first service.

To prevent the cell downlink control signal from being affected by transmission of the low-latency service, the time-frequency resource that meets the preset condition in this embodiment of the present invention may exclude the resource element reserved to carry the cell downlink control signal.

In this embodiment of the present invention, the cell downlink control signal may include downlink scheduling information, control format indicator information, and ARQ information. In an LTE communications system, the downlink scheduling information is mainly carried on a physical downlink control channel (Physical Downlink Control Channel, PDCCH), the control format indicator information may be used to indicate a quantity of symbols in one subframe that are used as a PDCCH, and is mainly carried on a physical control format indicator channel (Physical Control Format Indicator Channel, PCFICH), and the ARQ information is mainly carried on a physical hybrid ARQ indicator channel (Physical Hybrid ARQ Indicator Channel, PHICH). In other words, in the LTE communications system, the time-frequency resource that meets the preset condition may exclude resource elements reserved for the PDCCH, the PCFICH, and the PHICH.

To prevent the cell synchronization signal from being affected by transmission of the low-latency service, the time-frequency resource that meets the preset condition in this embodiment of the present invention may further exclude the resource element reserved for the downlink synchronization signal. In other words, the base station cannot transmit the low-latency service by occupying the resource element reserved for the downlink synchronization signal. The downlink synchronization signal is used to ensure that the terminal implements downlink synchronization in a cell. The downlink synchronization signal herein may include a primary synchronization signal (Primary Synchronization Signal, PSS) and a secondary synchronization signal (Secondary Synchronization Signal, SSS).

To prevent the cell-specific downlink reference signal from being affected by transmission of the low-latency service, the time-frequency resource that meets the preset condition in this embodiment of the present invention may further exclude the resource element reserved for the cell-specific downlink reference signal.

In this embodiment of the present invention, the cell-specific downlink reference signal may include a cell-specific reference signal (Cell-Specific Reference Signal, CRS), a positioning reference signal (Positioning Reference Signal, PRS), a channel state information-reference signal (CSI Reference Signal, CSI-RS), and a multicast-broadcast single-frequency network reference signal (MBSFN Reference Signal, MBSFN-RS). The CRS is corresponding to an antenna port of the base station, and is used for channel estimation and coherent demodulation in a downlink transmission technology other than a beamforming technology. The PRS is used to assist a positioning application of a terminal. The CSI-RS is used for channel estimation. The MBSFM-RS is used for channel estimation and coherent demodulation of an MBSFN.

It should be noted that like the cell-specific downlink reference signal, the base station may reserve, according to the protocol specifications, a resource element for carrying a UE-specific downlink reference signal. However, when the UE-specific downlink reference signal is configured as being allowed to occupy the resource element for carrying the UE-specific downlink reference signal, if the resource element reserved to carry the UE-specific downlink reference signal is not actually used by the UE-specific downlink reference signal, the base station may transmit the low-latency service by occupying the resource element reserved to carry the UE-specific downlink reference signal.

In this embodiment of the present invention, the UE-specific downlink reference signal may include a UE-specific reference signal (UE-Specific Reference Signal, UE-RS) and a UE-specific reference signal associated with PDSCH (UE-Specific Reference Signal associated with PDSCH). The UE-RS is corresponding to a specific terminal, and is used for channel estimation and coherent demodulation in the beamforming technology. The UE-specific reference signal associated with PDSCH is corresponding to a specific terminal, and is used for channel estimation and coherent demodulation of a PDSCH.

In this embodiment of the present invention, if the resource element reserved to carry the UE-specific downlink reference signal is actually occupied by the UE-specific downlink reference signal, the base station cannot transmit the low-latency service by using the resource element actually occupied by the UE-specific downlink reference signal.

In addition, to prevent a broadcast channel and a multicast channel from being affected by transmission of the low-latency service, the time-frequency resource that meets the preset condition in this embodiment of the present invention may further exclude resource elements reserved for a physical multicast channel (Physical Multicast Channel, PMCH) and a physical broadcast channel (Physical Broadcast Channel, PBCH). The PBCH is used to broadcast basic attribute information of a cell, for example, a cell ID, and is used for terminal access. The PBCH is used to carry broadcast information. The PMCH is used to carry broadcast information of a plurality of cells when a multimedia broadcast multicast service (Multicast Broadcast Multicast Service, MBMS) is supported.

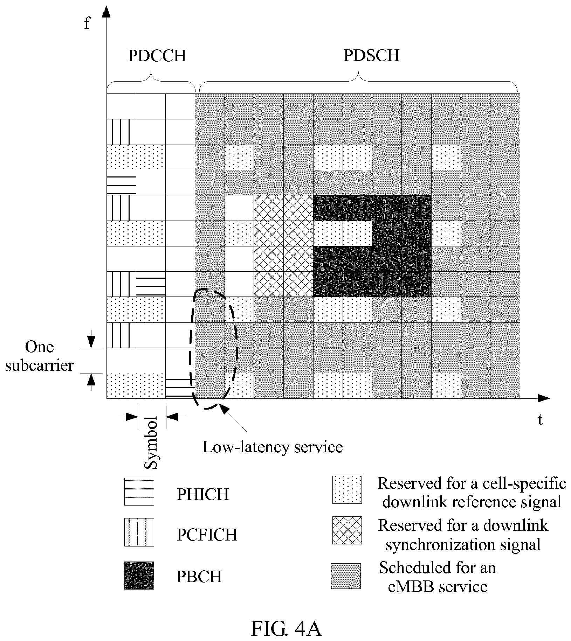

For the resource elements that are reserved by the base station to carry the cell downlink control signal, the downlink synchronization signal, and the cell-specific downlink reference signal, refer to a resource configuration example shown in FIG. 4A. As shown in FIG. 4A, in a single TTI, first N (N ranges from 1 to 4) OFDM symbols are allocated to the PDCCH for carrying the downlink scheduling information of the cell. The PDCCH in FIG. 4A occupies three (N=3) OFDM symbols, and the other OFDM symbol is allocated to a physical downlink shared channel (Physical Downlink Shared Channel, PDSCH). The PCFICH reserved to carry the control format indicator information, the PHICH reserved to carry the ARQ information, and the resource elements reserved to carry the downlink synchronization signal and the downlink reference signal are also shown in FIG. 4A. The accompanying drawing is merely used to explain this embodiment of the present invention, and does not constitute any limitation. For details of a resource configuration status of the cell downlink control signal, the downlink synchronization signal, and the cell-specific downlink reference signal, refer to the 3GPP TS 36.211 standard.

In an implementation of this embodiment of the present invention, the time-frequency resource that meets the preset condition may specifically include a time-frequency resource scheduled for a non-low-latency service.

It should be noted that the time-frequency resource scheduled for the non-low-latency service may include not only a time-frequency resource that is used to transmit a non-low-latency service and that is scheduled by the base station for another terminal, but also a part of a time-frequency resource that is used to transmit a non-low-latency service and that is scheduled by the base station for the terminal receiving the low-latency service. The another terminal herein is relative to the terminal receiving the low-latency service in this solution of the present invention.

In other words, when the base station needs to send the low-latency service to a terminal A, the base station may send the low-latency service by directly occupying a time-frequency resource that is used to transmit a non-low-latency service and that is scheduled for another terminal, or may send the low-latency service by occupying a time-frequency resource that is used to transmit a non-low-latency service and that is scheduled for the terminal A.

In addition, the base station may send only the low-latency service on the resource element that is used to transmit the low-latency service and that is selected from the time-frequency resource scheduled for the non-low-latency service, and does not send the non-low-latency service, so as to avoid interference from signal overlapping. In this way, the low-latency service can be transmitted in time by sharing a resource (namely, the time-frequency resource scheduled for the non-low-latency service), to improve resource utilization.

For example, FIG. 4A shows the time-frequency resource scheduled by the base station for the non-low-latency service (for example, an eMBB service) in the single TTI. When the low-latency service arrives, the base station may transmit the low-latency service by occupying a part (a resource indicated by a dashed line in the figure) of the time-frequency resource scheduled for the eMBB service. The example is merely intended to explain this embodiment of the present invention, and shall not be construed as a limitation.

In another implementation of this embodiment of the present invention, when the resource element reserved to carry the UE-specific downlink reference signal is configured as being allowed to be occupied, the time-frequency resource that meets the preset condition may specifically include a resource element that is reserved to carry the UE-specific downlink reference signal but that is not occupied by the UE-specific downlink reference signal. The resource element herein is referred to as a resource element that may be used to transmit the UE-specific downlink reference signal.

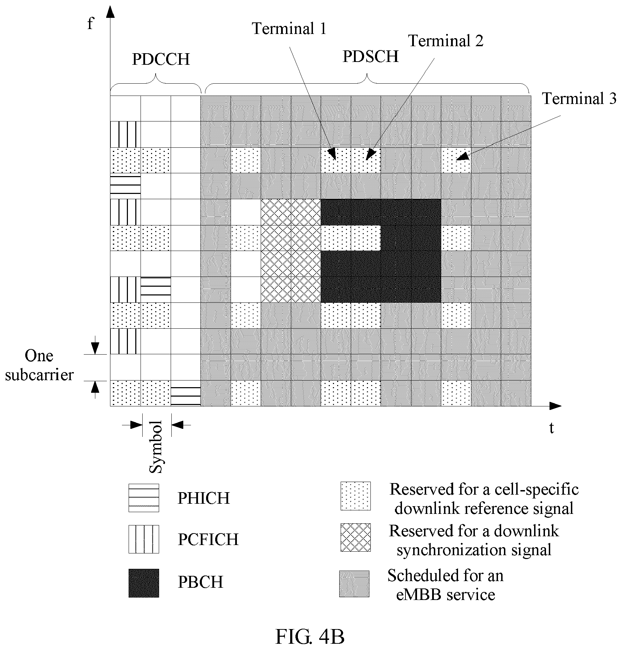

For example, resources that are separately reserved for reference signals corresponding to a terminal 1, a terminal 2, and a terminal 3 are shown in FIG. 4B. However, it does not mean that three resource blocks shown in the figure are definitely occupied by the reference signals. For example, if the base station does not send a data service to the terminal 1, the reference signal corresponding to the terminal 1 is not sent by the base station, namely, a resource element reserved to carry the reference signal corresponding to the terminal 1 is not actually occupied by the reference signal.

In specific implementation, an administrator may configure the base station by using higher layer configuration signaling, for example, radio resource control (Radio Resource Control, RRC) signaling, so as to stipulate whether a resource reserved for a reference signal corresponding to each terminal can be occupied.

In an implementation of this embodiment of the present invention, if an additional (additional) UE-specific reference signal is configured in the current transmission time interval, the time-frequency resource that meets the preset condition may further include a resource for carrying the additional UE-specific reference signal.

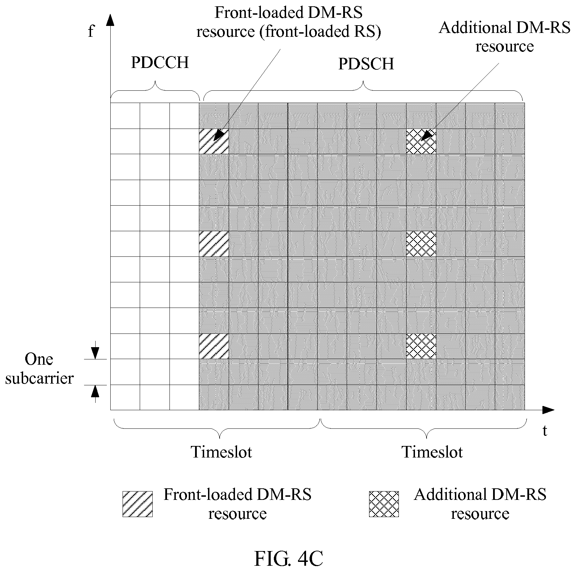

The additional UE-specific reference signal herein is relative to a front-loaded (front-loaded) UE-specific reference signal in the current transmission time interval. In other words, two UE-specific reference signals may be configured in one transmission time interval, for example, DM-RSs. The additional UE-specific reference signal is optional, and the base station may actually not transmit the additional UE-specific reference signal. For example, a front-loaded DM-RS and an additional DM-RS shown in FIG. 4C are configured in one transmission time interval, and the additional DM-RS may be preempted by the low-latency service. The example is merely intended to explain this embodiment of the present invention, and shall not be construed as a limitation.

To correctly implement channel estimation related to the additional UE-specific reference signal, if a resource element for carrying the additional UE-specific reference signal is preempted by the low-latency service, the base station may send fourth indication information to a terminal receiving the additional UE-specific reference signal, so as to notify the terminal receiving the additional UE-specific reference signal that a resource element indicated by the fourth indication information is occupied. The fourth indication information herein may be used to indicate the resource selected from the resource element for carrying the UE-specific reference signal. Optionally, the fourth indication information and second indication information may be sent together, for example, included in same indication information sent to a terminal. Optionally, the fourth indication information and third indication information may be sent together.

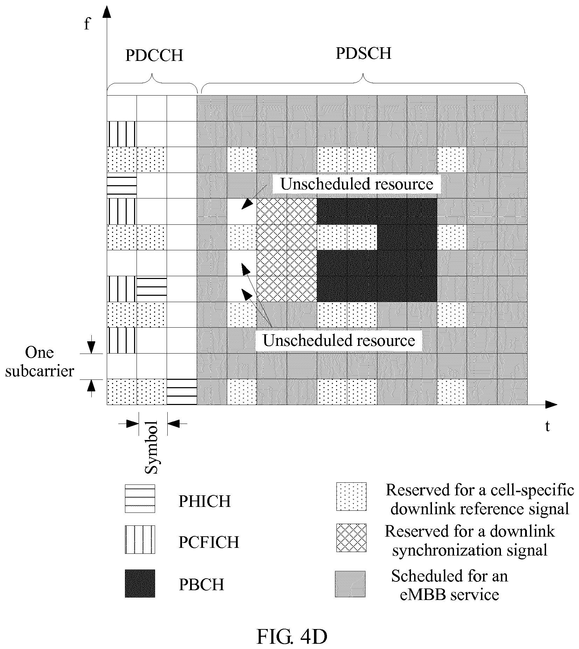

In this embodiment of the present invention, the time-frequency resource that meets the preset condition may include an unscheduled resource element in addition to the scheduled time-frequency resource. As shown in FIG. 4D, the base station may further select, from the unscheduled resource element, namely, an idle resource element, the resource element for transmitting the low-latency service, and send the low-latency service on the selected unscheduled resource element, thereby improving system resource utilization.

It should be noted that in implementation of this solution of the present invention, the time-frequency resource that meets the preset condition may include at least one of the time-frequency resource scheduled for the non-low-latency service, the resource element that may be used to transmit the UE-specific downlink reference signal, and the unscheduled resource element. That is, the base station may transmit the low-latency service by simultaneously occupying the three resources or by occupying any two of the resources or by occupying any one of the resources. This is not limited herein.

In this embodiment of the present invention, if the resource element that is used to transmit the low-latency service and that is selected by performing S101 includes the resource element scheduled for the non-low-latency service, and the base station sends the low-latency service by occupying the resource scheduled for the non-low-latency service, the base station may further send indication information of the occupied resource (namely, a resource element that is used to transmit the low-latency service and that is selected from the time-frequency resource scheduled for the non-low-latency service) to a terminal that originally receives the non-low-latency service, so as to notify the terminal that a resource indicated by the second indication information is occupied, and data transmitted on the occupied resource is not the non-low-latency service, so that the terminal ignores the data on the occupied resource. In this embodiment of the present invention, the indication information is referred to as the second indication information. The second indication information may be used to indicate the resource element that is used to transmit the low-latency service and that is selected from the time-frequency resource scheduled for the non-low-latency service, namely, the occupied resource element.

In an implementation, after the terminal that originally receives the non-low-latency service receives the second indication information, the terminal may request the base station to retransmit the non-low-latency service, so as to correctly receive the non-low-latency service. In another implementation, if the base station sends the low-latency service by occupying the resource scheduled for the non-low-latency service, the terminal that originally receives the non-low-latency service may automatically request the base station to retransmit the non-low-latency service upon expiry of a waiting period, so as to correctly receive the non-low-latency service.

To prevent all non-low-latency services from being affected by transmission of the low-latency service, the time-frequency resource that meets the preset condition may further exclude a resource element for carrying control information of the non-low-latency service (for example, an eMBB service). In this way, the control information of the non-low-latency service can be normally transmitted, and a non-low-latency service whose resource is not preempted by the low-latency service can be normally received.

Specifically, the control information of the non-low-latency service may include control information that is of the non-low-latency service and that is transmitted on a PDCCH, other non-data information or indication information of the non-low-latency service, and the like.

In this embodiment of the present invention, if the resource element that is used to transmit the low-latency service and that is selected by performing S101 includes the resource element that may be used to transmit the UE-specific downlink reference signal, and the base station sends the low-latency service by occupying the resource element that may be used to transmit the UE-specific downlink reference signal, the base station may further send indication information of the occupied resource element (namely, a resource element that is used to transmit the low-latency service and that is selected from the resource element that may be used to transmit the UE-specific downlink reference signal) to a terminal receiving the UE-specific downlink reference signal, so as to notify the terminal receiving the UE-specific downlink reference signal that a resource element indicated by the third indication information is occupied, and data transmitted on the occupied resource is not the UE-specific downlink reference signal. In this embodiment of the present invention, the indication information is referred to as the third indication information. The third indication information may be used to indicate the resource element that is used to transmit the low-latency service and that is selected from the resource element that may be used to transmit the UE-specific downlink reference signal, namely, the occupied resource element.

In specific implementation, the terminal receiving the UE-specific downlink reference signal may ignore, based on the third indication information, the data transmitted on the occupied resource, or may perform another operation. This is not limited herein.

It should be noted that similar to the first indication information, the base station may send the second indication information and the third indication information by using a pre-specified time-frequency resource.

To normally transmit the indication information (the first, the second, or the third indication information in this embodiment of the present invention), and avoid impact of transmission of the low-latency service, the time-frequency resource that meets the preset condition may further exclude a resource element for carrying one or more of the first indication information, the second indication information, and the third indication information.

Further, to correctly receive the indication information, the time-frequency resource that meets the preset condition may further exclude a resource for carrying control information of one or more of the first indication information, the second indication information, and the third indication information. The control information of the indication information may be used to correctly receive the indication information.

It should be noted that the low-latency service transmission method provided in this solution of the present invention may be applied to any downlink transmission time interval in the communications system shown in FIG. 1.

In addition, in this embodiment of the present invention, the following two implementations are provided to describe how to occupy the scheduled resource to send the low-latency service.

In a first implementation, before performing resource mapping on the low-latency service, the base station may traverse all resources (for example, REs/RBs/symbols/mini-slots) corresponding to the current TTI, exclude a resource that cannot be occupied, for example, the resource reserved to transmit the CRS, and select a resource that can be occupied. Then the base station may transmit the low-latency service by using the resource that can be occupied.

For example, if a resource traverse unit is a symbol (symbol), the base station may exclude a symbol that cannot be occupied, and select a symbol that can be occupied, and then transmit the low-latency service on the symbol that can be occupied. The example is merely an implementation of this embodiment of the present invention, and shall not be construed as a limitation.

In a second implementation, regardless of whether a time-frequency resource corresponding to the current TTI includes a time-frequency resource that cannot be preempted (for example, the resource reserved for the CRS), the base station first directly maps the low-latency service to the time-frequency resource corresponding to the current TTI. It can be understood that if resource mapping is first directly performed, some data of the low-latency service may be mapped to the time-frequency resource that cannot be preempted. Then, the base station may process data of the low-latency service on which resource mapping has been performed, and remove the data mapped to the time-frequency resource that cannot be preempted. Finally, the base station may use a time-frequency resource to which data that is not removed and that is of the low-latency service is mapped to transmit the data that is not removed and that is of the low-latency service. In the second implementation, because redundant data generated by data coding (for example, turbo coding) may facilitate data recovery, some removed service data (a data amount is not large) does not cause data distortion.

In implementation of this embodiment of the present invention, the base station may select, from the resource that is corresponding to the current transmission time interval and that meets the preset condition, the resource for transmitting the low-latency service, and send the low-latency service to the terminal on the selected resource. The resource that meets the preset condition includes the scheduled resource, but does not include the resources reserved to carry the cell downlink control signal, the downlink synchronization signal, and the cell-specific downlink reference signal. In the foregoing solution, resource utilization can be improved while the low-latency service is transmitted in time.

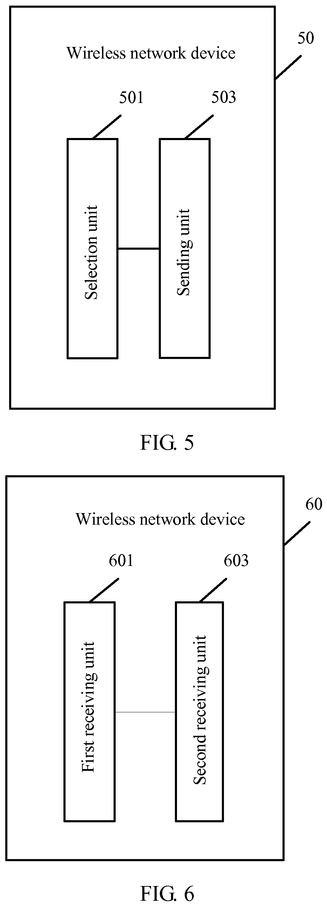

Referring to FIG. 5, FIG. 5 is a schematic structural diagram of a wireless network device according to an embodiment of the present invention. As shown in FIG. 5, a wireless network device 50 may include a selection unit 501 and a sending unit 503.

The selection unit 501 is configured to: when a sending instruction of a low-latency service is received, select, from a time-frequency resource that is corresponding to a current transmission time interval and that meets a preset condition, a resource element for transmitting the low-latency service.

The sending unit 503 is configured to: send the low-latency service on the selected resource element, and send first indication information to another wireless network device. The first indication information is used to indicate the selected resource element.

The time-frequency resource that meets the preset condition may include a scheduled time-frequency resource, but may exclude resource elements reserved to carry a cell downlink control signal, a downlink synchronization signal, and a cell-specific downlink reference signal. Optionally, the wireless network device 50 may be the base station in the method embodiment, and the another network device may be the terminal in the method embodiment.

In this embodiment of the present invention, the scheduled time-frequency resource may include a time-frequency resource that is allocated by the wireless network device 50 to each wireless network device through resource scheduling and that is used to transmit a data service, and a time-frequency that is allocated by the wireless network device 50 to each wireless network device through resource scheduling and that is used to transmit other data (for example, control information). The resource elements reserved to carry the cell downlink control signal, the downlink synchronization signal, and the cell-specific downlink reference signal may be resource elements reserved by the wireless network device 50 according to protocol specifications.

It can be understood that the time-frequency resource that meets the preset condition does not include the resource elements reserved to carry the cell downlink control signal, the downlink synchronization signal, and the cell-specific downlink reference signal, so that the cell control information, the synchronization signal, and the reference signal can be prevented from being affected by occupation of the reserved resource by the wireless network device 50. For related description about the cell downlink control signal, the downlink synchronization signal, and the cell-specific downlink reference signal, refer to content in the method embodiment. Details are not described herein again.

In addition, to prevent a broadcast channel and a multicast channel from being affected by transmission of the low-latency service, the time-frequency resource that meets the preset condition in this embodiment of the present invention may further exclude resource elements reserved for a PMCH and a PBCH.

In addition, to prevent all non-low-latency services from being affected by transmission of the low-latency service, the time-frequency resource that meets the preset condition may further exclude a resource element for carrying control information of the non-low-latency service (for example, an eMBB service). In this way, the control information of the non-low-latency service can be normally transmitted, and a non-low-latency service whose resource is not preempted by the low-latency service can be normally received.

Specifically, the control information of the non-low-latency service may include control information that is of the non-low-latency service and that is transmitted on a PDCCH, other non-data information or indication information of the non-low-latency service, and the like.

In an implementation of this embodiment of the present invention, the time-frequency resource that meets the preset condition may include a time-frequency resource scheduled for a non-low-latency service. When the low-latency service arrives, to transmit the low-latency service in time, the selection unit 501 may be configured to select, from the time-frequency resource scheduled for the non-low-latency service, the resource element for transmitting the low-latency service. In addition, the sending unit 503 may be specifically configured to send only the low-latency service on the resource element selected by the selection unit 501, and does not send the non-low-latency service, so as to avoid interference from signal overlapping.

In specific implementation, if the resource element selected by the selection unit 501 includes the time-frequency resource scheduled for the non-low-latency service, the sending unit 503 may be further configured to send second indication information to another wireless network device that originally receives the non-low-latency service, so as to notify the another wireless network device that a resource indicated by the second indication information is occupied, and data transmitted on the occupied resource is not the non-low-latency service, so that the another wireless network device ignores the data on the occupied resource. The second indication information may be used to indicate the resource element that is used to transmit the low-latency service and that is selected from the time-frequency resource scheduled for the non-low-latency service, namely, the occupied resource element.

In another implementation of this embodiment of the present invention, the time-frequency resource that meets the preset condition may include a resource element that is reserved to carry a UE-specific downlink reference signal but that is not occupied by the UE-specific downlink reference signal. The resource element herein is referred to as a resource element that may be used to transmit the UE-specific downlink reference signal.

If the selection unit 501 selects, from the resource element that may be used to transmit the UE-specific downlink reference signal, the resource element for sending the low-latency service, the sending unit 503 may be further configured to send third indication information to another wireless network device that originally receives the UE-specific downlink reference signal, so as to notify the another wireless network device receiving the UE-specific downlink reference signal that a resource element indicated by the third indication information is occupied, and data transmitted on the occupied resource is not the UE-specific downlink reference signal. The third indication information herein may be used to indicate the resource element that is used to transmit the low-latency service and that is selected from the resource element that may be used to transmit the UE-specific downlink reference signal, namely, the occupied resource element. Optionally, if an additional (additional) UE-specific reference signal is configured in the current transmission time interval, the resource that meets the preset condition may further include a resource for carrying the additional UE-specific reference signal.

To correctly implement channel estimation related to the additional UE-specific reference signal, if the resource for carrying the additional UE-specific reference signal is preempted by the low-latency service, the wireless network device 50 may send fourth indication information to a terminal receiving the additional UE-specific reference signal, so as to notify the terminal receiving the additional UE-specific reference signal that a resource indicated by the fourth indication information is occupied. The fourth indication information herein may be used to indicate the resource that meets the preset condition and that is selected from the resource for carrying the UE-specific reference signal.

Optionally, the fourth indication information and the second indication information may be sent together, for example, included in same indication information sent to a terminal. Optionally, the fourth indication information and the third indication information may be sent together.

To normally transmit the indication information (the first, the second, or the third indication information in this embodiment of the present invention), and avoid impact of transmission of the low-latency service, the resource that meets the preset condition in this embodiment of the present invention may further exclude a resource for carrying one or more of the first indication information, the second indication information, and the third indication information.

Further, to correctly receive the indication information, the resource that meets the preset condition in this embodiment of the present invention may further exclude a resource for carrying control information of one or more of the first indication information, the second indication information, and the third indication information. The control information of the indication information may be used to correctly receive the indication information. For example, the control information of the indication information is used to correctly demodulate a DMRS of the indication information.

In this embodiment of the present invention, the time-frequency resource that meets the preset condition may further include an unscheduled resource element. The selection unit 501 may be further configured to select, from the unscheduled resource element, namely, an idle resource element, the resource element for transmitting the low-latency service, and the sending unit 503 may be further configured to send the low-latency service on the selected unscheduled resource element, thereby improving system resource utilization.

It should be noted that for implementations of function units included in the wireless network device 50, refer to specific content about the base station in the method embodiment. Details are not described herein again.

Referring to FIG. 6, FIG. 6 is a schematic structural diagram of a wireless network device 60 according to an embodiment of the present invention. As shown in FIG. 6, a wireless network device 60 may include a first receiving unit 601 and a second receiving unit 605.

The first receiving unit 601 is configured to receive first indication information sent by another wireless network device. The first indication information is used to indicate a resource element for transmitting a low-latency service, and the resource element is selected by the another wireless network device from a time-frequency resource that is corresponding to a current transmission time interval and that meets a preset condition.

The second receiving unit 605 is configured to receive the low-latency service based on the first indication information on the resource element indicated by the first indication information.

The time-frequency resource that meets the preset condition may include a scheduled time-frequency resource. Further, the time-frequency resource that meets the preset condition may exclude resource elements reserved to carry a cell downlink control signal, a downlink synchronization signal, and a downlink reference signal.

Optionally, the wireless network device 60 may be the terminal in the method embodiment, and the another network device may be the base station in the method embodiment.

In this embodiment of the present invention, the scheduled time-frequency resource may include a time-frequency resource that is allocated by the another wireless network device to each wireless network device through resource scheduling and that is used to transmit a data service, and a time-frequency that is allocated by the another wireless network device to each wireless network device through resource scheduling and that is used to transmit other data (for example, control information). The resource elements reserved to carry the cell downlink control signal, the downlink synchronization signal, and the cell-specific downlink reference signal may be resource elements reserved by the another wireless network device according to protocol specifications.

It can be understood that the time-frequency resource that meets the preset condition may exclude the resource elements reserved to carry the cell downlink control signal, the downlink synchronization signal, and the cell-specific downlink reference signal, so that the cell control information, the synchronization signal, and the reference signal can be prevented from being affected by occupation of the reserved resource by the another wireless network device. For related description about the cell downlink control signal, the downlink synchronization signal, and the cell-specific downlink reference signal, refer to content in the method embodiment. Details are not described herein again.

In addition, to prevent a broadcast channel and a multicast channel from being affected by transmission of the low-latency service, the time-frequency resource that meets the preset condition in this embodiment of the present invention may further exclude resource elements reserved for a PMCH and a PBCH.

In addition, to prevent all non-low-latency services from being affected by transmission of the low-latency service, the resource that meets the preset condition in this embodiment of the present invention may further exclude a resource for carrying control information of the non-low-latency service (for example, an eMBB service). In this way, the control information of the non-low-latency service can be normally transmitted, and a non-low-latency service whose resource is not preempted by the low-latency service can be normally received.

Specifically, the control information of the non-low-latency service may include control information that is of the non-low-latency service and that is transmitted on a PDCCH, other non-data information or indication information of the non-low-latency service, and the like.

In an implementation of this embodiment of the present invention, the time-frequency resource that meets the preset condition may specifically include a time-frequency resource scheduled for a non-low-latency service. When the low-latency service arrives, to transmit the low-latency service in time, the another wireless network device may send the low-latency service to the wireless network device 60 by directly occupying the time-frequency resource scheduled for the non-low-latency service.

In another implementation of this embodiment of the present invention, the time-frequency resource that meets the preset condition may further include a resource element that is reserved to carry a UE-specific downlink reference signal but that is not occupied by the UE-specific downlink reference signal. The resource element herein is referred to as a resource element that may be used to transmit the UE-specific downlink reference signal. The another wireless network device may send the low-latency service to the wireless network device 60 by directly occupying the resource element that may be used to transmit the UE-specific downlink reference signal.

Optionally, if an additional (additional) UE-specific reference signal is configured in the current transmission time interval, the resource that meets the preset condition may further include a resource for carrying the additional UE-specific reference signal.

To correctly implement channel estimation related to the additional UE-specific reference signal, if the resource for carrying the additional UE-specific reference signal is preempted by the low-latency service, the wireless network device 50 may send fourth indication information to a terminal receiving the additional UE-specific reference signal, so as to notify the terminal receiving the additional UE-specific reference signal that a resource indicated by the fourth indication information is occupied. The fourth indication information herein may be used to indicate the resource that meets the preset condition and that is selected from the resource for carrying the UE-specific reference signal.

Optionally, the fourth indication information and the second indication information may be sent together, for example, included in same indication information sent to a terminal. Optionally, the fourth indication information and the third indication information may be sent together.

To normally transmit the indication information (the first, the second, or the third indication information in this embodiment of the present invention), and avoid impact of transmission of the low-latency service, the resource that meets the preset condition in this embodiment of the present invention may further exclude a resource for carrying one or more of the first indication information, the second indication information, and the third indication information.

Further, to correctly receive the indication information, the resource that meets the preset condition in this embodiment of the present invention may further exclude a resource for carrying control information of one or more of the first indication information, the second indication information, and the third indication information. The control information of the indication information may be used to correctly receive the indication information. For example, the control information of the indication information is used to correctly demodulate a DMRS of the indication information.

In this embodiment of the present invention, the time-frequency resource that meets the preset condition may further include an unscheduled resource element. The another wireless network device may further send the low-latency service to the wireless network device 60 by directly occupying the unscheduled resource element, namely, an idle resource element, thereby improving system resource utilization.

It should be noted that for implementations of function units included in the wireless network device 60, refer to specific content about the terminal in the method embodiment. Details are not described herein again.

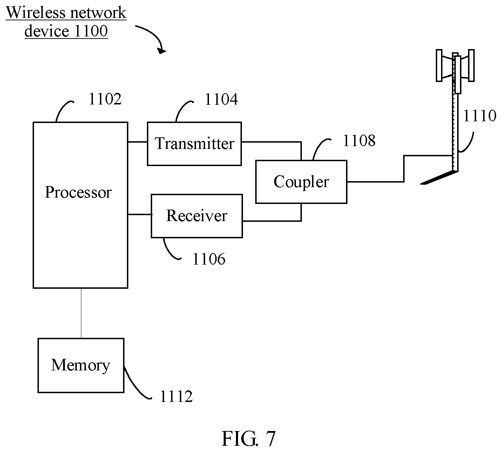

To facilitate implementation of the embodiments of the present invention, the present invention provides a schematic structural diagram of a wireless network device, so as to implement functions of the base station in the method embodiment. Referring to FIG. 7, a wireless network device 1100 may include a processor 1102, a transmitter 1104, a receiver 1106, a coupler 1108, an antenna 1110, and a memory 1112. In some embodiments of the present invention, these components may be connected by using a bus or in another manner. A bus connection is used as an example in FIG. 7.

The antenna 1110 is configured to: convert electromagnetic energy in a transmission line into an electromagnetic wave in free space, or convert an electromagnetic wave in free space into electromagnetic energy in a transmission line. The coupler 1108 is configured to: divide a mobile communication signal received by the antenna 1110 into a plurality of signals, and allocate the plurality of signals to a plurality of receivers 1106.

The transmitter 1104 is configured to perform transmission processing (for example, modulation) on a mobile communication signal generated by the processor 1102. The receiver 1106 is configured to perform reception processing (for example, demodulation) on a mobile communication signal received by the antenna 1110. The transmitter 1104 and the receiver 1106 may be considered as a wireless modem. In specific implementation, there may be one or more transmitters 1104 or receivers 1106.

The memory 1112 is configured to store program code. In specific implementation, the memory 1112 may be a read-only memory (Read-Only Memory, ROM), and the read-only memory may be configured to store the program code.

Optionally, the processor 1102 may be configured to be responsible for all functions related to an air interface: (1) a radio link maintenance function including maintenance of a radio link with a terminal and protocol conversion between radio link data and IP data; (2) a radio resource management function including establishment and release of a radio link, radio resource scheduling and allocation, and the like; (3) some mobility management functions including one or more of terminal configuration for measurement, terminal radio link quality evaluation, determining of cell handover for a terminal, and the like. In this embodiment of the present invention, the processor 1102 may be further configured to invoke the program code stored in the memory 1112, to perform the following steps:
when a sending instruction of a low-latency service is received, selecting, from a time-frequency resource that is corresponding to a current transmission time interval and that meets a preset condition, a resource element for transmitting the low-latency service; and
sending the low-latency service on the selected resource element by using the transmitter 1104, and sending first indication information to another wireless network device, where the first indication information is used to indicate the selected resource element.

The time-frequency resource that meets the preset condition may include a scheduled time-frequency resource.

Further, the time-frequency resource that meets the preset condition may exclude resource elements reserved to carry a cell downlink control signal, a downlink synchronization signal, and a cell-specific downlink reference signal.

Optionally, the wireless network device 1100 may be the base station in the method embodiment, and the another network device may be the terminal in the method embodiment.

In this embodiment of the present invention, the scheduled time-frequency resource may include a time-frequency resource that is allocated by the wireless network device 1100 to each wireless network device through resource scheduling and that is used to transmit a data service, and a time-frequency that is allocated by the wireless network device 1100 to each wireless network device through resource scheduling and that is used to transmit other data (for example, control information). The resource elements reserved to carry the cell downlink control signal, the downlink synchronization signal, and the cell-specific downlink reference signal may be resource elements reserved by the wireless network device 1100 according to protocol specifications.

It can be understood that the time-frequency resource that meets the preset condition does not include the resource elements reserved to carry the cell downlink control signal, the downlink synchronization signal, and the cell-specific downlink reference signal, so that the cell control information, the synchronization signal, and the reference signal can be prevented from being affected by occupation of the reserved resource by the wireless network device 1100. For related description about the cell downlink control signal, the downlink synchronization signal, and the downlink reference signal, refer to content in the method embodiment. Details are not described herein again.

In addition, to prevent a broadcast channel and a multicast channel from being affected by transmission of the low-latency service, the time-frequency resource that meets the preset condition in this embodiment of the present invention may further exclude resource elements reserved for a PMCH and a PBCH.

In addition, to prevent all non-low-latency services from being affected by transmission of the low-latency service, the resource that meets the preset condition in this embodiment of the present invention may further exclude a resource element for carrying control information of the non-low-latency service (for example, an eMBB service). In this way, the control information of the non-low-latency service can be normally transmitted, and a non-low-latency service whose resource is not preempted by the low-latency service can be normally received.

Specifically, the control information of the non-low-latency service may include control information that is of the non-low-latency service and that is transmitted on a PDCCH, other non-data information or indication information of the non-low-latency service, and the like.

In an implementation of this embodiment of the present invention, the scheduled time-frequency resource may specifically include a time-frequency resource scheduled for a non-low-latency service. When the low-latency service arrives, to transmit the low-latency service in time, the processor 1102 may select, from the time-frequency resource scheduled for the non-low-latency service, the resource element for transmitting the low-latency service. In addition, the processor 1102 may send only the low-latency service by using the transmitter 1104 on the selected resource element, and does not send the non-low-latency service, so as to avoid interference from signal overlapping.

In specific implementation, if the processor 1102 sends the low-latency service by occupying the resource scheduled for the non-low-latency service, the processor 1102 may further send, by using the transmitter 1104, second indication information to another wireless network device that originally receives the non-low-latency service, so as to notify the another wireless network device that a resource indicated by the second indication information is occupied, and data transmitted on the occupied resource is not the non-low-latency service, so that the another wireless network device ignores the data on the occupied resource. The second indication information herein may be used to indicate the resource element that is used to transmit the low-latency service and that is selected from the time-frequency resource scheduled for the non-low-latency service, namely, the occupied resource element.

In another implementation of this embodiment of the present invention, the scheduled time-frequency resource may specifically include a resource element that is reserved for a UE-specific downlink reference signal but that is not occupied by the UE-specific downlink reference signal. The resource element herein is referred to as a resource element that may be used to transmit the UE-specific downlink reference signal.

Optionally, if an additional (additional) UE-specific reference signal is configured in the current transmission time interval, the resource that meets the preset condition may further include a resource for carrying the additional UE-specific reference signal.

If the processor 1102 selects, from the resource element that may be used to transmit the UE-specific downlink reference signal, the resource element for sending the low-latency service, the processor 1102 may further send, by using the transmitter 1104, third indication information to another wireless network device that receives the UE-specific downlink reference signal, so as to notify the another wireless network device receiving the UE-specific downlink reference signal that a resource element indicated by the third indication information is occupied, and data transmitted on the occupied resource is not the downlink reference signal. The third indication information herein is used to indicate the resource element that is used to transmit the low-latency service and that is selected from the resource element that may be used to transmit the UE-specific downlink reference signal, namely, the occupied resource element.

To normally transmit the indication information (the first, the second, or the third indication information in this embodiment of the present invention), and avoid impact of transmission of the low-latency service, the resource that meets the preset condition in this embodiment of the present invention may further exclude a resource element for carrying one or more of the first indication information, the second indication information, and the third indication information. Further, to correctly receive the indication information, the resource that meets the preset condition in this embodiment of the present invention may further exclude a resource element for carrying control information of one or more of the first indication information, the second indication information, and the third indication information. The control information of the indication information may be used to correctly receive the indication information. For example, the control information of the indication information is used to correctly demodulate a DMRS of the indication information.

In this embodiment of the present invention, the time-frequency resource that meets the preset condition may include an unscheduled resource element in addition to the scheduled time-frequency resource. The processor 1102 may further select, from the unscheduled resource element, namely, an idle resource element, the resource element for transmitting the low-latency service, and send the low-latency service by using the transmitter 1104 on the selected unscheduled resource element, thereby improving system resource utilization.

It can be understood that for specific execution steps of the processor 1102, refer to functions of the base station in the method embodiment. Details are not described herein again.

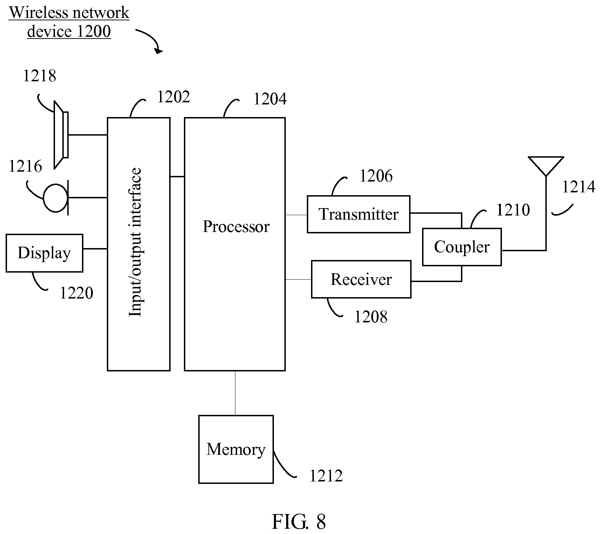

To facilitate implementation of the embodiments of the present invention, the present invention provides a schematic structural diagram of a wireless network device, so as to implement functions of the terminal in the method embodiment. Referring to FIG. 8, a wireless network device 1200 may include an input/output module (including an audio input/output module 1218, a key input module 1216, a display 1220, and the like), an input/output interface 1202, a processor 1204, a transmitter 1206, a receiver 1208, a coupler 1210, an antenna 1214, and a memory 1212. In some embodiments of the present invention, these components may be connected by using a bus or in another manner. A bus connection is used as an example in FIG. 8. The antenna 1214 is configured to: convert electromagnetic energy in a transmission line into an electromagnetic wave in free space, or convert an electromagnetic wave in free space into electromagnetic energy in a transmission line. The coupler 1210 is configured to: divide a mobile communication signal received by the antenna 1214 into a plurality of signals, and allocate the plurality of signals to a plurality of receivers 1208.

The transmitter 1206 is configured to perform transmission processing (for example, modulation) on a mobile communication signal generated by the processor 1204. The receiver 1208 is configured to perform reception processing (for example, demodulation) on a mobile communication signal received by the antenna 1214. The transmitter 1206 and the receiver 1208 may be considered as a wireless modem. In specific implementation, there may be one or more transmitters 1206 or receivers 1208.

The input/output module is mainly configured to implement an interaction function between the wireless network device 1200 and a user/external environment, and mainly includes the audio input/output module 1218, the key input module 1216, the display 1220, and the like. In specific implementation, the input/output module may further include one or more of a camera, a touchscreen, a sensor, and the like. The input/output module communicates with the processor 1204 by using the input/output interface 1202.

The input/output interface 1202 is a connection circuit between the processor 1204 and the input/output module for information exchange, is connected to the processor 1204 by using a bus, and may be simply referred to as an I/O interface.

The memory 1212 is coupled to the processor 1204, so as to store various software programs and/or a plurality of sets of instructions. In specific implementation, the memory 1212 may include a high-speed random access memory, and may further include a nonvolatile memory, such as one or more disk storage devices, a flash storage device, or another nonvolatile solid-state storage device. The processor 1204 is mainly configured to: invoke the program stored in the memory 1212, and perform the following steps:
receiving, by using the receiver 1208, first indication information sent by another wireless network device, where the first indication information is used to indicate a resource element for transmitting a low-latency service, and the resource element is selected by the another wireless network device from a time-frequency resource that is corresponding to a current transmission time interval and that meets a preset condition; and
receiving, by using the receiver 1208, the low-latency service based on the first indication information on the resource element indicated by the first indication information.

The time-frequency resource that meets the preset condition may include a scheduled time-frequency resource, but may exclude resource elements reserved to carry a cell downlink control signal, a downlink synchronization signal, and a cell-specific downlink reference signal. Optionally, the wireless network device 1200 may be the terminal in the method embodiment, and the another network device may be the base station in the method embodiment.

In this embodiment of the present invention, the scheduled time-frequency resource may include a time-frequency resource that is allocated by the another network device to each wireless network device through resource scheduling and that is used to transmit a data service, and a time-frequency that is allocated by the another network device to each wireless network device through resource scheduling and that is used to transmit other data (for example, control information). The resource elements reserved to carry the cell downlink control signal, the downlink synchronization signal, and the cell-specific downlink reference signal may be resource elements reserved by the another network device according to protocol specifications.

It can be understood that the time-frequency resource that meets the preset condition does not include the resource elements reserved to carry the cell downlink control signal, the downlink synchronization signal, and the cell-specific downlink reference signal, so that the cell control information, the synchronization signal, and the reference signal can be prevented from being affected by occupation of the reserved resource by the another network device. For related description about the cell downlink control signal, the downlink synchronization signal, and the downlink reference signal, refer to content in the method embodiment. Details are not described herein again.

In addition, to prevent a broadcast channel and a multicast channel from being affected by transmission of the low-latency service, the time-frequency resource that meets the preset condition in this embodiment of the present invention may further exclude resource elements reserved for a PMCH and a PBCH.

In addition, to prevent all non-low-latency services from being affected by transmission of the low-latency service, the resource that meets the preset condition in this embodiment of the present invention may further exclude a resource for carrying control information of the non-low-latency service (for example, an eMBB service). In this way, the control information of the non-low-latency service can be normally transmitted, and a non-low-latency service whose resource is not preempted by the low-latency service can be normally received.

Specifically, the control information of the non-low-latency service may include control information that is of the non-low-latency service and that is transmitted on a PDCCH, other non-data information or indication information of the non-low-latency service, and the like.

In an implementation of this embodiment of the present invention, the time-frequency resource that meets the preset condition may specifically include a time-frequency resource scheduled for a non-low-latency service. When the low-latency service arrives, to transmit the low-latency service in time, the another wireless network device may transmit the low-latency service by directly occupying the time-frequency resource scheduled for the non-low-latency service.

In another implementation of this embodiment of the present invention, the time-frequency resource that meets the preset condition may specifically include a resource element that is reserved for a UE-specific downlink reference signal but that is not occupied by the UE-specific downlink reference signal. The resource element herein is referred to as a resource element that may be used to transmit the UE-specific downlink reference signal. The another wireless network device may transmit the low-latency service by directly occupying the resource element that may be used to transmit the UE-specific downlink reference signal.

Optionally, if an additional (additional) UE-specific reference signal is configured in the current transmission time interval, the resource that meets the preset condition may further include a resource for carrying the additional UE-specific reference signal.

To normally transmit the indication information (the first, the second, or the third indication information in this embodiment of the present invention), and avoid impact of transmission of the low-latency service, the resource that meets the preset condition in this embodiment of the present invention may further exclude a resource for carrying one or more of the first indication information, the second indication information, and the third indication information.

Further, to correctly receive the indication information, the resource that meets the preset condition in this embodiment of the present invention may further exclude a resource for carrying control information of one or more of the first indication information, the second indication information, and the third indication information. The control information of the indication information may be used to correctly receive the indication information. For example, the control information of the indication information is used to correctly demodulate a DMRS of the indication information.

In this embodiment of the present invention, the time-frequency resource that meets the preset condition may include an unscheduled resource element in addition to the scheduled time-frequency resource. The another wireless network device may further transmit the low-latency service by directly occupying the unscheduled resource element, namely, an idle resource element, thereby improving system resource utilization.

It should be noted that the wireless network device 1200 may be a terminal in a 4G communications system (LTE) and future 4.5G and 5G.

It can be understood that for specific execution steps of the processor 1204, refer to functions of the terminal in the method embodiment. Details are not described herein again.

In addition, an embodiment of the present invention further provides a communications system (as shown in FIG. 1). The communications system includes a first wireless network device and a second wireless network device. The first wireless network device may be the base station in the method embodiment, and the second wireless network device may be the terminal (equivalent to the user equipment UE in FIG. 1) in the method embodiment.

In specific implementation, the first wireless network device may be the wireless network device 50 described in the embodiment in FIG. 5, and the second wireless network device may be the wireless network device 60 in FIG. 6.

In specific implementation, the first wireless network device may be the wireless network device 1100 in FIG. 7, and the second wireless network device may be the wireless network device 1200 in FIG. 8.

In view of the above, in implementation of the embodiments of the present invention, the base station may select, from the resource that is corresponding to the current transmission time interval and that meets the preset condition, the resource for transmitting the low-latency service, and send the low-latency service to the terminal on the selected resource. The resource that meets the preset condition includes the scheduled resource. In the foregoing solutions, resource utilization can be improved while the low-latency service is transmitted in time.

A person of ordinary skill in the art may understand that all or some of the steps of the methods in the embodiments may be implemented by a program instructing relevant hardware. The program may be stored in a computer readable storage medium. The storage medium may include a flash memory, a read-only memory (Read-Only Memory, ROM), a random access memory (Random Access Memory, RAM), a magnetic disk, and an optical disc.

## Claims

1. A data transmission method, comprising:
determining, by a base station from a first resource corresponding to a current transmission time interval, a resource for transmitting a first low-latency service; and
sending (S105), by the base station, the first low-latency service on the determined resource, and sending (S103) first indication information to a terminal, wherein the first indication information is used to indicate the resource for transmitting the first low-latency service, the first resource comprises a scheduled resource that is scheduled for a non-low-latency service, and the first resource does not comprise a resource for carrying one or more of a cell downlink control signal, a downlink synchronization signal, and a cell-specific downlink reference signal.

2. The method according to claim 1, wherein a resource for carrying a UE-specific downlink reference signal is configured as being allowed to be occupied, and the first resource comprises a resource that is reserved to carry the UE-specific downlink reference signal but that is not occupied by the UE-specific downlink reference signal.

3. The method according to claim 2, wherein the method further comprises: if the first resource comprises the resource that is used to carry the UE-specific downlink reference signal but that is not occupied by the UE-specific downlink reference signal, sending, by the base station, third indication information to a terminal receiving the downlink reference signal, so as to notify the terminal receiving the UE-specific downlink reference signal that a resource indicated by the third indication information is occupied, wherein the third indication information is used to indicate the determined resource selected from the resource that is used to carry the UE-specific downlink reference signal but that is not occupied by the UE-specific downlink reference signal.

4. The method according to claim 2 or 3, wherein the UE-specific downlink reference signal comprises one or more of the following: a UE-specific reference signal, a UE-specific reference signal associated with physical downlink shared channel, PDSCH, a UE-specific reference signal associated with physical downlink control channel, PDCCH, and a reference signal of the first indication information.

5. The method according to claim 4, wherein an additional UE-specific reference signal is configured in the current transmission time interval, and the first resource further comprises a resource for carrying the additional UE-specific reference signal.

6. The method according to claim 5, wherein the method further comprises: sending, by the base station, fourth indication information to a terminal receiving the additional UE-specific reference signal, so as to notify the terminal receiving the additional UE-specific reference signal that a resource indicated by the fourth indication information is occupied, wherein the fourth indication information is used to indicate the determined resource selected from the resource for carrying the UE-specific reference signal.

7. A data transmission method, comprising:
receiving, by a terminal, first indication information sent by a base station, wherein the first indication information is used to indicate a resource that is used to transmit a first low-latency service and that is determined by the base station from a first resource corresponding to a current transmission time interval; and
receiving (S107), by the terminal, the first low-latency service based on the first indication information on the resource indicated by the first indication information; wherein
the first resource comprises a scheduled resource that is scheduled for a non-low-latency service and the first resource does not comprise a resource for carrying one or more of a cell downlink control signal, a downlink synchronization signal, and a cell-specific downlink reference signal.

8. The method according to claim 7, wherein a resource for carrying a UE-specific downlink reference signal is configured as being allowed to be occupied, and the first resource further comprises a resource that is reserved to carry the UE-specific downlink reference signal but that is not occupied by the UE-specific downlink reference signal.

9. The method according to claim 8, wherein the UE-specific downlink reference signal comprises one or more of the following: a UE-specific reference signal, a UE-specific reference signal associated with physical downlink shared channel, PDSCH, a UE-specific reference signal associated with physical downlink control channel, PDCCH, and a reference signal of the first indication information.

10. The method according to claim 9, wherein an additional UE-specific reference signal is configured in the current transmission time interval, and the first resource further comprises a resource for carrying the additional UE-specific reference signal.

11. The method according to claim 10, wherein the method further comprises: receiving fourth indication information, wherein the fourth indication information is used to indicate that the determined resource selected from the resource for carrying the UE-specific reference signal is occupied.

12. A wireless network device (1100), comprising a memory (1112), a processor (1102) coupled to the memory (1112), and a transmitter (1104), wherein the processor (1102) is configured to read instructions stored in the memory (1112), to perform the method according to any one of claims 1 to 6.

13. A wireless network device (1200), comprising a memory (1212), a processor (1204) coupled to the memory (1212), and a receiver (1208), wherein the processor (1204) is configured to read instructions stored in the memory (1212), to perform the method according to any one of claims 7 to 11.

## Patentansprüche

1. Datenübertragungsverfahren, das Folgendes umfasst:
Bestimmen einer Ressource zum Übertragen eines ersten Dienstes niedriger Latenz durch eine Basisstation aus einer ersten Ressource, die einem aktuellen Übertragungszeitintervall entspricht; und
Senden (S105) des Dienstes niedriger Latenz durch die Basisstation auf der bestimmten Ressource und Senden (S103) von ersten Anzeigeinformationen an ein Endgerät, wobei die ersten Anzeigeinformationen verwendet werden, um die Ressource zum Übertragen des ersten Dienstes niedriger Latenz anzuzeigen, die erste Ressource eine geplante Ressource umfasst, die für einen Dienst nicht niedriger Latenz geplant ist, und die erste Ressource eine Ressource zum Transportieren von einem oder mehrerem eines Zelldownlinksteuersignals, eines Downlinksynchronisationssignals und eines zellspezifischen Downlinkreferenzsignals umfasst.

2. Verfahren nach Anspruch 1, wobei eine Ressource zum Transportieren eines UE-spezifischen Downlinkreferenzsignals derart ausgelegt ist, dass es ihr erlaubt ist, belegt zu sein, und die erste Ressource eine Ressource umfasst, die zum Transportieren des UE-spezifischen Downlinkreferenzsignals reserviert ist, die aber nicht vom UE-spezifischen Downlinkreferenzsignal belegt ist.

3. Verfahren nach Anspruch 2, wobei das Verfahren ferner Folgendes umfasst: wenn die erste Ressource die Ressource umfasst, die verwendet wird, um das UE-spezifische Downlinkreferenzsignal zu transportieren, die aber vom UE-spezifischen Downlinkreferenzsignal nicht belegt ist, Senden von dritten Anzeigeinformationen durch die Basisstation an ein Endgerät, das das Downlinkreferenzsignal empfängt, um dem Endgerät, das das UE-spezifische Downlinkreferenzsignal empfängt, mitzuteilen, dass eine Ressource, die von den dritten Anzeigeinformationen angezeigt wird, belegt ist, wobei die dritten Anzeigeinformationen verwendet werden, um die bestimmte Ressource, die aus der Ressource ausgewählt ist, die verwendet wird, um das UE-spezifische Downlinkreferenzsignal zu transportieren, die aber vom UE-spezifischen Downlinkreferenzsignal nicht belegt ist, anzuzeigen.

4. Verfahren nach Anspruch 2 oder 3, wobei das UE-spezifische Downlinkreferenzsignal eines oder mehreres von Folgendem umfasst: ein UE-spezifisches Referenzsignal, ein UE-spezifisches Referenzsignal, das mit einem physischen Downlink Shared Channel, PDSCH, verknüpft ist, ein UE-spezifisches Referenzsignal, das mit einem physischen Downlinksteuerkanal, PDCCH, verknüpft ist, und ein Referenzsignal der ersten Anzeigeinformationen.

5. Verfahren nach Anspruch 4, wobei ein zusätzliches UE-spezifisches Referenzsignal im aktuellen Übertragungszeitintervall ausgelegt ist und die erste Ressource ferner eine Ressource zum Transportieren des zusätzlichen UE-spezifischen Referenzsignals umfasst.

6. Verfahren nach Anspruch 5, wobei das Verfahren ferner Folgendes umfasst: Senden von vierten Anzeigeinformationen durch die Basisstation an ein Endgerät, das das zusätzliche UE-spezifische Referenzsignal empfängt, um dem Endgerät, das das zusätzliche UE-spezifische Referenzsignal empfängt, mitzuteilen, dass eine Ressource, die von den vierten Anzeigeinformationen angezeigt wird, belegt ist, wobei die vierten Anzeigeinformationen verwendet werden, um die bestimmte Ressource, die aus der Ressource zum Transportieren des UE-spezifischen Referenzsignals ausgewählt ist, anzuzeigen.

7. Datenübertragungsverfahren, das Folgendes umfasst:
Empfangen von ersten Anzeigeinformationen, die von einer Basisstation gesendet werden, durch ein Endgerät, wobei die ersten Anzeigeinformationen verwendet werden, um eine Ressource anzuzeigen, die verwendet wird, um einen ersten Dienst niedriger Latenz zu übertragen, und die von der Basisstation aus einer ersten Ressource, die einem aktuellen Übertragungszeitintervall entspricht, bestimmt wird; und
Empfangen (S107) des ersten Dienstes niedriger Latenz auf Basis der ersten Anzeigeinformationen durch das Endgerät auf der Ressource, die von den ersten Anzeigeinformationen angezeigt wird; wobei
die erste Ressource eine geplante Ressource umfasst, die für einen Dienst nicht niedriger Latenz geplant ist, und die erste Ressource eine Ressource zum Transportieren von einem oder mehrerem eines Zelldownlinksteuersignals, eines Downlinksynchronisationssignals und eines zellspezifischen Downlinkreferenzsignals umfasst.

8. Verfahren nach Anspruch 7, wobei eine Ressource zum Transportieren eines UE-spezifischen Downlinkreferenzsignals derart ausgelegt ist, dass es ihr erlaubt ist, belegt zu sein, und die erste Ressource ferner eine Ressource umfasst, die zum Transportieren des UE-spezifischen Downlinkreferenzsignals reserviert ist, die aber nicht vom UE-spezifischen Downlinkreferenzsignal belegt ist.

9. Verfahren nach Anspruch 8, wobei das UE-spezifische Downlinkreferenzsignal eines oder mehreres von Folgendem umfasst: ein UE-spezifisches Referenzsignal, ein UE-spezifisches Referenzsignal, das mit einem physischen Downlink Shared Channel, PDSCH, verknüpft ist, ein UE-spezifisches Referenzsignal, das mit einem physischen Downlinksteuerkanal, PDCCH, verknüpft ist, und ein Referenzsignal der ersten Anzeigeinformationen.

10. Verfahren nach Anspruch 9, wobei ein zusätzliches UE-spezifisches Referenzsignal im aktuellen Übertragungszeitintervall ausgelegt ist und die erste Ressource ferner eine Ressource zum Transportieren des zusätzlichen UE-spezifischen Referenzsignals umfasst.

11. Verfahren nach Anspruch 10, wobei das Verfahren ferner Folgendes umfasst: Empfangen von vierten Anzeigeinformationen, wobei die vierten Anzeigeinformationen verwendet werden, um anzuzeigen, dass die bestimmte Ressource, die aus der Ressource zum Transportieren des UE-spezifischen Referenzsignals ausgewählt ist, belegt ist.

12. Drahtlosnetzwerkvorrichtung (1100), die einen Speicher (1112), einen Prozessor (1102), der an den Speicher (1112) gekoppelt ist, und einen Sender (1104) umfasst, wobei der Prozessor (1102) dazu ausgelegt ist, Anweisungen zu lesen, die im Speicher (1112) gespeichert sind, um das Verfahren nach einem der Ansprüche 1 bis 6 durchzuführen.

13. Drahtlosnetzwerkvorrichtung (1200), die einen Speicher (1212), einen Prozessor (1204), der an den Speicher (1212) gekoppelt ist, und einen Empfänger (1208) umfasst, wobei der Prozessor (1204) dazu ausgelegt ist, Anweisungen zu lesen, die im Speicher (1212) gespeichert sind, um das Verfahren nach einem der Ansprüche 7 bis 11 durchzuführen.

## Revendications

1. Procédé de transmission de données, comprenant :
la détermination, par une station de base à partir d'une première ressource correspondant à un intervalle de temps de transmission actuel, d'une ressource pour transmettre un premier service à faible latence ; et
l'envoi (S105), par la station de base, du premier service à faible latence sur la ressource déterminée, et l'envoi (S103) de premières informations d'indication à un terminal, dans lequel les premières informations d'indication sont utilisées pour indiquer la ressource pour transmettre le premier service à faible latence, la première ressource comprend une ressource planifiée qui est planifiée pour un service non à faible latence, et la première ressource ne comprend pas de ressource pour transporter un ou plusieurs d'un signal de commande en liaison descendante de cellule, d'un signal de synchronisation en liaison descendante et d'un signal de référence en liaison descendante spécifique à une cellule.

2. Procédé selon la revendication 1, dans lequel une ressource pour transporter un signal de référence en liaison descendante spécifique à un UE est configurée comme étant autorisée à être occupée, et la première ressource comprend une ressource qui est réservée pour transporter le signal de référence en liaison descendante spécifique à un UE mais qui n'est pas occupée par le signal de référence en liaison descendante spécifique à un UE.

3. Procédé selon la revendication 2, dans lequel le procédé comprend en outre : si la première ressource comprend la ressource qui est utilisée pour transporter le signal de référence en liaison descendante spécifique à un UE mais qui n'est pas occupée par le signal de référence en liaison descendante spécifique à un UE, l'envoi, par la station de base, de troisièmes informations d'indication à un terminal recevant le signal de référence en liaison descendante, de façon à notifier le terminal recevant le signal de référence en liaison descendante spécifique à un UE qu'une ressource indiquée par les troisièmes informations d'indication est occupée, les troisièmes informations d'indication étant utilisées pour indiquer la ressource déterminée sélectionnée à partir de la ressource qui est utilisée pour transporter le signal de référence en liaison descendante spécifique à un UE mais qui n'est pas occupée par le signal de référence en liaison descendante spécifique à un UE.

4. Procédé selon la revendication 2 ou 3, dans lequel le signal de référence en liaison descendante spécifique à un UE comprend un ou plusieurs des éléments suivants : un signal de référence spécifique à un UE, un signal de référence spécifique à un UE associé à un canal physique partagé en liaison descendante, PDSCH, un signal de référence spécifique à un UE associé à un canal physique de commande en liaison descendante, PDCCH, et un signal de référence des premières informations d'indication.

5. Procédé selon la revendication 4, dans lequel un signal de référence spécifique à un UE supplémentaire est configuré dans l'intervalle de temps de transmission actuel, et la première ressource comprend en outre une ressource pour transporter le signal de référence spécifique à un UE supplémentaire.

6. Procédé selon la revendication 5, dans lequel le procédé comprend en outre : l'envoi, par la station de base, de quatrièmes informations d'indication à un terminal recevant le signal de référence spécifique à un UE supplémentaire, de façon à notifier le terminal recevant le signal de référence spécifique à un UE supplémentaire qu'une ressource indiquée par les quatrièmes informations d'indication est occupée, les quatrièmes informations d'indication étant utilisées pour indiquer la ressource déterminée sélectionnée à partir de la ressource pour transporter le signal de référence spécifique à un UE.

7. Procédé de transmission de données, comprenant :
la réception, par un terminal, de premières informations d'indication envoyées par une station de base, les premières informations d'indication étant utilisées pour indiquer une ressource qui est utilisée pour transmettre un premier service à faible latence et qui est déterminé par la station de base à partir d'une première ressource correspondant à un intervalle de temps de transmission actuel ; et
la réception (S 107), par le terminal, du premier service à faible latence sur la base des premières informations d'indication sur la ressource indiquée par les premières informations d'indication ; dans lequel
la première ressource comprend une ressource planifiée qui est planifiée pour un service non à faible latence et la première ressource ne comprend pas de ressource pour transporter un ou plusieurs d'un signal de commande en liaison descendante de cellule, d'un signal de synchronisation en liaison descendante et d'un signal de référence en liaison descendante spécifique à une cellule.

8. Procédé selon la revendication 7, dans lequel une ressource pour transporter un signal de référence en liaison descendante spécifique à un UE est configuré comme étant autorisée à être occupée, et la première ressource comprend en outre une ressource qui est réservée pour transporter le signal de référence en liaison descendante spécifique à un UE mais qui n'est pas occupée par le signal de référence en liaison descendante spécifique à un UE.

9. Procédé selon la revendication 8, dans lequel le signal de référence en liaison descendante spécifique à un UE comprend un ou plusieurs des éléments suivants : un signal de référence spécifique à un UE, un signal de référence spécifique à un UE associé à un canal physique partagé en liaison descendante, PDSCH, un signal de référence spécifique à un UE associé à un canal physique de commande en liaison descendante, PDCCH, et un signal de référence des premières informations d'indication.

10. Procédé selon la revendication 9, dans lequel un signal de référence spécifique à un UE supplémentaire est configuré dans l'intervalle de temps de transmission actuel, et la première ressource comprend en outre une ressource pour transporter le signal de référence spécifique à un UE supplémentaire.

11. Procédé selon la revendication 10, dans lequel le procédé comprend en outre : la réception de quatrièmes informations d'indication, les quatrièmes informations d'indication étant utilisées pour indiquer que la ressource déterminée sélectionnée à partir de la ressource pour transporter le signal de référence spécifique à un UE est occupée.

12. Dispositif de réseau sans fil (1100), comprenant une mémoire (1112), un processeur (1102) couplé à la mémoire (1112) et un émetteur (1104), le processeur (1102) étant configuré pour lire des instructions stockées dans la mémoire (1112) afin d'effectuer le procédé selon l'une quelconque des revendications 1 à 6.

13. Dispositif de réseau sans fil (1200), comprenant une mémoire (1212), un processeur (1204) couplé à la mémoire (1212) et un récepteur (1208), le processeur (1204) étant configuré pour lire des instructions stockées dans la mémoire (1212) afin d'effectuer le procédé selon l'une quelconque des revendications 7 à 11.
